# EUROPEAN PATENT APPLICATION

(11) **EP 4 319 094 A1**
(43) Date of publication of application: **07.02.2024**
(21) Application number: 22773978.6
(22) Date of filing: 24.02.2022
(51) Int. Cl.: H04L 47/20

(54) **CONTROL METHOD AND APPARATUS, AND COMPUTING DEVICE**

(30) Priority: 22.03.2021 CN 202110302539
(71) Applicant: Alibaba (China) Co., Ltd., Binjiang District Hangzhou, Zhejiang 310052 (CN)
(72) Inventor: LYU, Yilong, Hangzhou, Zhejiang 310052 (CN)
(74) Representative: Ipside
(86) International application number: PCT/CN2022/077740
(87) International publication number: WO 2022/199316

(57) **Abstract**

Embodiments of the present application provide a control method and apparatus, a computing device. The method comprises : detecting that access traffic satisfies a rate limit condition, and capturing an access packet; parsing the access packet to obtain inner-layer encapsulation information of the access packet; determining, on the basis of the inner-layer encapsulation information, a source virtual machine that satisfies the rate limit condition; and sending back pressure information to a source host machine of the source virtual machine, wherein the back pressure information is used for instructing to perform packet rate limit processing on the source virtual machine. According to the technical solution provided by the embodiments of the present application, the access packet is parsed, such that a source virtual machine that launches an attack can be identified, and back pressure can be performed on the source virtual machine to implement packet rate limit processing, and thus the problem of traffic attacks is solved.

## Description

### TECHNICAL FIELD

Embodiments of the present application relate to the field of network technology, and in particular to a control method and apparatus, and a computing device.

### BACKGROUND

An Overlay network is a virtual network built on the basis of an existing physical network. For example, Vxlan (Virtual Extensible Local Area Network) is an Overlay network.

In a case where the Overlay network adopts a many-to-one communication mode, there will inevitably be a traffic attack problem. For example, multiple virtual machines access the same virtual machine, which results in that a CPU (central processing unit) corresponding to a virtual switch in a host machine where the destination virtual machine is located is excessively occupied, thereby affecting the use of other virtual machines in the same host machine. For another example, multiple virtual machines simultaneously access other networks through a virtual gateway, which results in that a CPU of a device where the virtual gateway is located is excessively occupied, thereby affecting normal network access, etc.

Therefore, how to solve the traffic attack problem has become a technical problem that needs urgently to be addressed at present, in the Overlay network.

### SUMMARY

Embodiments of the present application provide a control method and apparatus, and a computing device, to solve the traffic attack problem in the prior art.

In the first aspect, an embodiment of the present application provides a control method, including:
detecting that access traffic satisfies a rate limit condition, and capturing an access message;
parsing the access message to obtain inner-layer encapsulation information in the access message;
determining, based on the inner-layer encapsulation information, a source virtual machine that satisfies the rate limit condition; and
sending back pressure information to a source host machine where the source virtual machine is located; wherein, the back pressure information is used for instructing to perform message rate limit processing on the source virtual machine.

In the second aspect, an embodiment of the present application provides a control method, including:
receiving back pressure information; wherein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing an access message, and parsing the access message; and
performing message rate limit processing on the source virtual machine according to the back pressure information.

In the third aspect, an embodiment of the present application provides a control apparatus, including:
a message capturing module, configured for detecting that access traffic satisfies a rate limit condition, and capturing an access message;
a message parsing module, configured for parsing the access message to obtain inner-layer encapsulation information in the access message;
a determination module, configured for determining, based on the inner-layer encapsulation information, a source virtual machine that satisfies the rate limit condition; and
a back pressure triggering module, configured for sending back pressure information to a source host machine where the source virtual machine is located; wherein, the back pressure information is used for instructing to perform message rate limit processing on the source virtual machine.

In the fourth aspect, an embodiment of the present application provides a control apparatus, including:
an information receiving module, configured for receiving back pressure information; wherein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing an access message, and parsing the access message; and
a processing module, configured for performing message rate limit processing on the source virtual machine according to the back pressure information.

In the fifth aspect, an embodiment of the present application provides a computing device, including a processing component and a storage component, wherein the storage component stores one or more computer instructions, and the one or more computer instructions are used for being called and executed by the processing component, to run at least one virtual machine and run a virtual switch implementing the control method in the first aspect above.

In the sixth aspect, an embodiment of the present application provides a computing device, including a processing component and a storage component, wherein the storage component stores one or more computer instructions, and the one or more computer instructions are used for being called and executed by the processing component, to run a virtual gateway implementing the control method in the first aspect above.

In the seventh aspect, an embodiment of the present application provides a computing device, including a processing component and a storage component, wherein the storage component stores one or more computer instructions, and the one or more computer instructions are used for being called and executed by the processing component, to run at least one virtual machine and run a virtual switch implementing the control method in the second aspect above.

In the eighth aspect, an embodiment of the present application provides a computer storage medium, storing a computer program, wherein the computer program, when executed by a computer, implements the control method in the first aspect above.

In the ninth aspect, an embodiment of the present application provides a computer storage medium, storing a computer program, wherein the computer program, when executed by a computer, implements the control method in the second aspect above.

In the embodiments of the present application, when it is detected that the access traffic satisfies the rate limit condition, the access message may be parsed to obtain the inner-layer encapsulation information, and then the source virtual machine initiating an attack may be determined based on the inner-layer encapsulation information, thus the back pressure information may be sent to the destination host machine where the source virtual machine is located, to instruct to perform message rate limit processing on the source virtual machine. This embodiment may identify the source virtual machine which has initiated the attack by parsing the access message, and implements message rate limit processing by performing the back pressure on the source virtual machine, to solve the traffic attack problem.

These aspects or other aspects of the present application will be more concise and understandable in the description of the following embodiments.

### BRIEF DESCRIPTION OF THE DRAWINGS

To illustrate the technical solutions of the embodiments of the present application or of the prior art more clearly, accompanying drawings to be used in the description of the embodiments or the prior art will be described briefly below. Obviously, the accompanying drawings described below are some embodiments of the present application. Those skilled in the art may also obtain other drawings based on these accompanying drawings without creative efforts.
FIG. 1a shows a schematic diagram of a traffic attack scenario in the prior art;
FIG. 1b shows a schematic diagram of another traffic attack scenario in the prior art;
FIG. 2 shows a flowchart of an embodiment of a control method provided by the present application;
FIG. 3 shows a schematic diagram of a message format of a back pressure message in a practical application of an embodiment of the present application;
FIG. 4 shows a flowchart of a further embodiment of a control method provided by the present application;
FIG. 5 shows a flowchart of a further embodiment of a control method provided by the present application;
FIG. 6a shows a schematic diagram of control interaction in a practical application of an embodiment of the present application;
FIG. 6b shows a schematic diagram of control interaction in a further practical application of an embodiment of the present application;
FIG. 7 shows a structural schematic diagram of an embodiment of a control apparatus provided by the present application;
FIG. 8 shows a structural schematic diagram of a further embodiment of a control apparatus provided by the present application;
FIG. 9 shows a structural schematic diagram of an embodiment of a computing device provided by the present application;
FIG. 10 shows a structural schematic diagram of a further embodiment of a computing device provided by the present application; and
FIG. 11 shows a structural schematic diagram of a further embodiment of a computing device provided by the present application.

### DETAILED DESCRIPTION

In order to enable those skilled in the art to better understand the solution of the present application, the technical solutions in the embodiments of the present application will be clearly and completely described below in combination with the accompanying drawings in the embodiments of the present application.

Multiple operations that appear in a specific order are contained in some of flows described in the specification, the claims, and the above accompanying drawings of the present application. However, it should be clearly understood that these operations may not be performed in accordance with an order in which these operations appear herein or these operations may be performed in parallel. Order numbers of the operations, such as 101, 102 and the like, are only used to distinguish various different operations, and the order numbers themselves do not represent any execution orders. In addition, these flows may include more or fewer operations, and these operations may be performed sequentially or in parallel. It should be noted that the descriptions herein, such as "first", "second" and the like, are used to distinguish different messages, devices, modules, etc., does not represent sequential orders, and does also not limit that "first" and "second" are different types.

The technical solutions of the embodiments of the present application are applied to a virtual network, to solve the traffic attack problem in the virtual network, such as the traffic attack problem in the Overlay network.

For ease of understanding, technical terms that may be involved in the embodiments of the present application are explained correspondingly first below.

Virtual machine (abbreviated as VM): refers to a complete computer system that is simulated through software, has a complete hardware system function, and runs in a completely isolated environment.

Host machine: is a physical host running a virtual machine.

Overlay network: is a virtual network built on the basis of an existing physical network.

Vxlan (Virtual Extensible Local Area Network): is an Overlay network of a two-layer network built on the basis of a three-layer network, and adopts an encapsulation format of encapsulating an original message in a UDP (User Datagram Protocol) data packet.

Quintuple information: includes a source IP (Internet Protocol) address, a source port, a destination IP address, a destination port, and a transport layer protocol. In a virtual network, the source IP address in the quintuple information encapsulated in an inner layer is a virtual IP address of a source virtual machine, the source port is a virtual port of the source virtual machine, the destination IP address is a virtual IP address of a destination end, and the source port is a virtual port of the destination end. One message flow may be uniquely identified by inner-layer quintuple information.

Message flow: refers to a flow formed by messages transmitted between a source IP address and a destination IP address. All messages in a message flow have the same quintuple information.

Virtual switch (abbreviated as VSwitch): provides two-layer network access and a part of three-layer network functions for a virtual machine running on the present host machine. The access of the source virtual machine to the destination virtual machine needs to be achieved through a virtual switch. The virtual switch is responsible for forwarding an access message from the source virtual machine to the destination virtual machine.

Virtual gateway (abbreviated as VG): is used to realize interconnection between a network where the virtual machine is located and other networks.

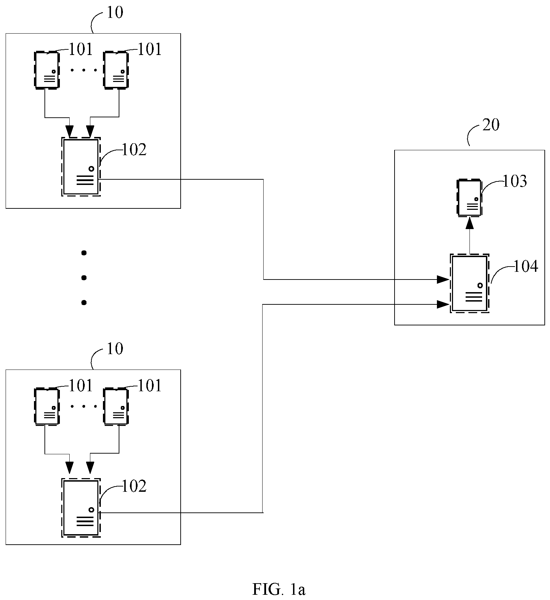

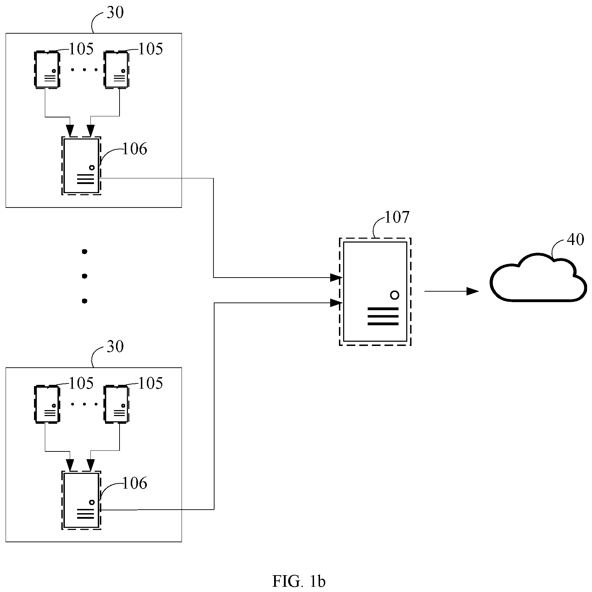

Taking the Overlay network as an example, with the development of cloud computing technology, a cloud data center is usually implemented based on the Overlay network. In the Overlay network, traffic attack scenarios caused by two common access manners using a many-to-one communication mode are shown in FIG. 1a and FIG. 1b, respectively. FIG. 1a shows the situation where multiple virtual machines simultaneously access one virtual machine. In a practical application, multiple virtual machines may be installed in one host machine. As shown in FIG. 1a, a source virtual machine 101 in a source host machine 10 requests to send an access message to a certain destination virtual machine 103 in a destination host machine 20 through a source virtual switch 102 in the source host machine 10. A destination virtual switch 104 in the destination host machine 20 is responsible for forwarding the access message to the destination virtual machine 103. In the many-to-one communication mode, multiple source virtual machines 101 may continuously request to send access messages to one destination virtual machine 103 simultaneously. Herein, the multiple source virtual machines 101 may be located in the same source host machine 10, or may also be located in multiple source host machines 10. At this point, the destination virtual machine switch 104 may receive a large number of access messages and need to forward a large number of messages, which may cause the forwarding capacity of a forwarding CPU corresponding to the destination virtual machine switch 104 to be too high and become overwhelmed, affecting the processing performance of the forwarding CPU, and in turn affecting the normal use of other virtual machines in the destination host machine 20.

FIG. 1b shows the situation where multiple virtual machines simultaneously access a public network through a virtual gateway. As shown in FIG. 1b, a source virtual machine 105 in a source host machine 30 may send an access message to a virtual gateway 107 through a source virtual switch 106 in the source host machine 30, to request access to a public network 40. The virtual gateway 107 is responsible for forwarding a message. In the many-to-one communication mode, multiple source virtual machines 105 may simultaneously send access messages to the virtual gateway 107, and the multiple source virtual machines 105 may be located in the same source host machine 30, or may also be located in multiple source host machines 30. At this point, the virtual gateway 107 may receive a large number of access messages and need to forward a large number of messages, which may cause the forwarding capacity of a forwarding CPU corresponding to the virtual gateway 107 to be too high and become overwhelmed, affecting the processing performance of the forwarding CPU, and in turn affecting the normal network access of other virtual machines through the virtual gateway.

In order to solve the traffic attack problem, the inventor discovered during the implementation of the present application that in an Overlay network, an original message of a virtual machine may undergo secondary encapsulation, and network-related information, such as a host machine address, is incorporated to form an access message. That is, the original message in the access message is encapsulated in the inner layer, and the outer layer includes the network-related information. Taking Vxlan as an example, in a Vxlan message, an original message is encapsulated in a UDP data format, a Vxlan header is added to the original message, and both are encapsulated in a UDP data packet. For example, the Vxlan header information may include a Vxaln identifier, an IP header, etc. The IP header mainly includes a host IP address for communication between hosts, etc. Of course, the Vxlan header information may also include other information, which is the same as the existing Vxlan header information, and will not be repeated in the present application. The original message is a message that is truly transmitted between virtual machines. The header information of the original message, for example, includes a virtual machine IP address, a port, a transport layer protocol, etc., for communication between virtual machines.

Due to the secondary encapsulation of the original message, it is impossible to determine who sent the access message, and therefore it is impossible to determine an attacker. By adopting the technical solution of the embodiment of the present application, combined with the message parsing ability of the virtual switch or virtual gateway, the access message may be parsed to identify the source virtual machine that generates the attack, and then back pressure information may be constructed, which achieves message rate limit processing for the source virtual machine, and thus may solve the traffic attack problem.

The technical solutions in the embodiments of the present application will be described clearly and completely below in combination with the accompanying drawings in the embodiments of the present application. Obviously, the described embodiments are merely a part of and not all of the embodiments of the present application. Based on the embodiments of the present application, all other embodiments obtained by those skilled in the art without creative efforts fall into the scope of protection of the present application.

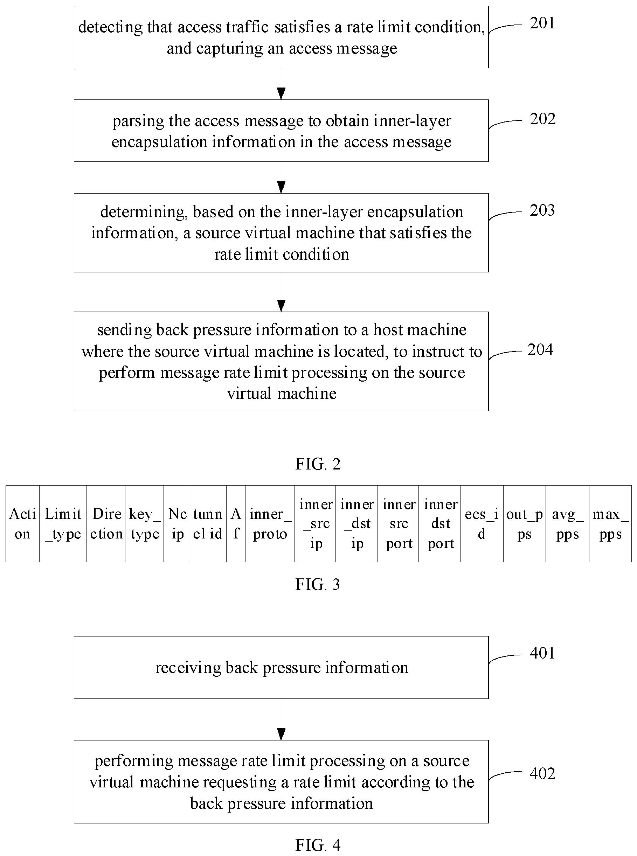

FIG. 2 is a flowchart of an embodiment of a control method provided by the present application. The technical solution of this embodiment may be executed by a destination end as an attacked party, such as a virtual switch or a virtual gateway. The method may include the following steps:
201: detecting that access traffic satisfies a rate limit condition, and capturing an access message.

Herein, whether the access traffic satisfies the rate limit condition may be implemented by detecting the forwarding capacity or CPU water level of a forwarding CPU. If the forwarding capacity is higher than a certain capacity or the CPU water level is higher than a certain water level, it can be considered that the access traffic satisfies the rate limit condition.

If the access traffic satisfies the rate limit condition, the access message may be captured from the forwarding CPU.

In a practical application, the virtual machine switch or virtual gateway may achieve functions thereof by using one or more CPUs. The forwarding CPU refers to a CPU responsible for message forwarding.

Optionally, access messages may be captured according to a sampling frequency and sampling quantity, that is, packet capture sampling is performed in the forwarding CPU, such as capturing 1000 access messages per second.

It should be noted that capturing the access messages does not mean intercepting the access messages, but rather performing mirror processing on the access messages and copying the obtained access messages. The destination end will still perform normal access processing based on the access messages, for example, forwarding to the destination virtual machine or an external network, etc.

202: parsing the access message to obtain inner-layer encapsulation information in the access message.

The captured access message may be parsed to obtain its inner-layer encapsulation information.

The inner-layer encapsulation information mainly refers to header information encapsulated in an original message in the access message, such as inner-layer quintuple information.

203: determining, based on the inner-layer encapsulation information, a source virtual machine that satisfies the rate limit condition.

Since the inner-layer quintuple information may uniquely identify a message flow, based on the number of messages in the message flow, it may be determined which message flow caused the attack, and then the corresponding source virtual machine may be determined based on the source IP address in the inner-layer quintuple information corresponding to the message flow.

Therefore, alternatively, the determining, based on the inner-layer encapsulation information, the source virtual machine that satisfies the rate limit condition, includes: aggregating access messages based on a message flow identified by the inner-layer encapsulation information, to determine numbers of messages for different message flows; selecting a message flow to be limited in rate according to the numbers of messages for the different message flows; and determining a source virtual machine corresponding to the message flow to be limited in rate.

As an optional manner, the selecting the message flow to be limited in rate according to the numbers of messages for the different message flows may include: selecting a message flow to be limited in rate with the number of messages greater than or equal to a preset number, according to the numbers of messages for the different message flows.

As an optional manner, the determining the message flow to be limited in rate according to the numbers of messages for the different message flows includes: selecting top N message flows, in a descending order of the numbers of messages, as message flows to be limited in rate.

Herein, there may be multiple source virtual machines that satisfy the rate limit condition, and for each source virtual machine that satisfies the rate limit condition, message rate limit processing may be performed according to the following manner.

204: sending back pressure information to a host machine where the source virtual machine is located; wherein, the back pressure information is used for instructing to perform message rate limit processing on the source virtual machine.

After determining the source virtual machine that satisfies the rate limit condition, the back pressure information may be sent. The back pressure information is specifically received by the source virtual switch in the source host machine. Then, the rate limit processing is performed on the source virtual machine according to the back pressure information.

Herein, the back pressure information may be sent based on a host machine address in the outer-layer encapsulation information obtained by parsing the access message. The host machine address may specifically refer to a host machine IP address.

In this embodiment, when it is detected that the access traffic satisfies the rate limit condition, the access message may be parsed to obtain the inner-layer encapsulation information, and then the source virtual machine initiating an attack may be determined based on the inner-layer encapsulation information, thus the back pressure information may be sent to the destination host machine where the source virtual machine is located, to instruct to perform message rate limit processing on the source virtual machine. This embodiment may identify the source virtual machine which has initiated the attack by parsing the access message, and implements message rate limit processing by performing the back pressure on the source virtual machine, to solve the traffic attack problem.

In some embodiments, the method may also include:
determining a back pressure object in the source virtual machine; wherein, the back pressure object may refer to all message flows sent by the source virtual machine, all message flows which are sent by the source virtual machine to a destination virtual machine corresponding to a message flow to be limited in rate sent by the source virtual machine, or a message flow to be limited in rate sent by the source virtual machine; and
generating the back pressure information at least according to the back pressure object; wherein, the back pressure information is used for instructing to perform message rate limit processing on the back pressure object.

The source virtual machine may send multiple message flows, however, only one of the message flows may generate a traffic attack. For the determined message flow to be limited in rate of the source virtual machine, the message flow to be limited in rate may be used as the back pressure object, or, in the scenario where multiple source virtual machines simultaneously access one destination virtual machine, the destination virtual machine may be determined based on the destination IP address in the inner-layer quintuple information corresponding to the message flow to be limited in rate, and all message flows sent to the destination virtual machine may be used as the back pressure objects; or, all message flows sent by the source virtual machine are directly used as the back pressure objects. Herein, the back pressure object may be pre-set in combination with actual needs.

In some embodiments, the method may also include:
determining at least one processing manner of a rate limit processing manner and an alarm processing manner which correspond to the source virtual machine; and
generating the back pressure information at least according to the at least one processing manner; wherein, the back pressure information is used for instructing to perform message rate limit processing on the source virtual machine according to the at least one processing manner.

Optionally, the back pressure object in the source virtual machine may also be determined. Then, the back pressure information may be specifically generated according to the at least one processing manner and the back pressure object, to instruct to perform message rate limit processing on the back pressure object in the source virtual machine according to the at least one processing manner.

In some embodiments, the method may also include:
in a case where the at least one processing manner comprises the rate limit processing manner, determining a rate limit type corresponding to the source virtual machine; and
the generating the back pressure information at least according to the at least one processing manner, includes:
   generating the back pressure information at least according to the at least one processing manner and the rate limit type; wherein, the back pressure information may specifically instruct to perform the rate limit processing on the source virtual machine according to the rate limit processing manner corresponding to the rate limit type.

Optionally, the back pressure information may also be generated according to the at least one processing manner, the rate limit type and the back pressure obj ect.

In a practical application, the rate limit processing manner may include adjusting a packet forwarding rate (abbreviated as pps) and/or a bit rate for sending messages. The pps rate limit may be achieved by limiting the number of packets sent per second, and the bit rate may be achieved by limiting the bps (Bit Per Second). The rate limit type may include at least one of the pps rate limit and the bps rate limit.

In addition, because one host machine may be provided with multiple virtual machines and one virtual machine may send multiple message flows, in order to facilitate the source virtual switch to determine the back pressure object for the back pressure information, optionally, the back pressure information may also include the inner-layer quintuple information in the inner-layer encapsulation information.

In addition, the back pressure information may also include a virtual network identifier, such as a VNI (Vxlan Network Identifier) in a Vxlan network. Only virtual machines on the same virtual network can communicate with each other, so that the back pressure object in the source virtual machine may be identified based on the virtual network identifier and the inner-layer quintuple information in the back pressure information.

In combination with the above description, it can be seen that the back pressure information may include at least one of: the at least one processing manner, the rate limit information, the back pressure object, the inner-layer quintuple information in the inner-layer encapsulation information, and the virtual network identifier. Furthermore, the back pressure information may also include a network protocol in the inner-layer encapsulation information. In addition, in the scenario where the virtual gateway is subjected to a traffic attack, the traffic attack may come from an internal network or an external network, so the back pressure information may also include a traffic attack direction, etc.

Herein, the alarm processing manner may instruct to perform the alarm processing on the source virtual machine, for example, including that the current packet sending situation of the source virtual machine, the virtual machine identifier of the source virtual machine, the back pressure object identifier, etc., are acquired as response information to be fed back to the destination end, and the destination end performs an alarm based on this, such as outputting alarm prompt information.

The rate limit processing manner may instruct to perform pps rate limit and/or bps rate limit on the source virtual machine, and the current packet sending situation of the source virtual machine, the virtual machine identifier of the source virtual machine, the back pressure object identifier, etc., are acquired to be fed back to the destination end, and the destination end performs an alarm based on this, such as outputting alarm prompt information.

Therefore, in some embodiments, the method may also include:
receiving response information, which is fed back after performing the message rate limit processing on the source virtual machine according to the back pressure information; and
outputting alarm prompt information based on the response information.

Optionally, the response information may include the source virtual machine identifier, the back pressure object identifier, and/or the current packet sending situation of the source virtual machine, etc.

The current packet sending situation may include, for example, a current packet forwarding rate, an average packet forwarding rate within a recent preset time range, a maximum packet forwarding rate within the recent preset time range; and the current packet sending situation may also include a current bit rate, an average bit rate within the recent preset time range, and a maximum bit rate within the recent preset time range.

Optionally, outputting the alarm prompt information may include: sending the alarm prompt information based on the communication account of relevant personnel. Of course, outputting the alarm prompt information may also include: sending the alarm prompt information to a corresponding display device to display the alarm prompt information, thereby facilitating the relevant personnel to discover the source virtual machine generating the attack, the current attack situation, and/or the rate limit effect, etc.

In a practical implementation, the back pressure information may be encapsulated as a back pressure message to be sent. Therefore, in some embodiments, the method may also include: parsing the access message to obtain outer-layer encapsulation information;
the sending the back pressure information to the host machine where the source virtual machine is located, includes:
constructing a back pressure message, based on back pressure indication information, and the inner-layer encapsulation information and outer-layer encapsulation information corresponding to the source virtual machine; and
sending the back pressure message as the back pressure information to the host machine where the source virtual machine is located.

Herein, the outer-layer encapsulation information may specifically include the source host machine address. In addition, the outer-layer encapsulation information may also include the destination host address, etc.

In some embodiments, the back pressure message may at least include: at least one back pressure field corresponding to the back pressure indication information, a host machine address field, a network identifier field, and a field corresponding to each of inner-layer quintuple;
the constructing the back pressure message, based on the back pressure indication information, and the inner-layer encapsulation information and the outer-layer encapsulation information corresponding to the source virtual machine, may include:
filling the back pressure indication information into the at least one back pressure field;
filling a source host machine address in the outer-layer encapsulation information corresponding to the source virtual machine, into the host machine address field;
filling a virtual network identifier in the outer-layer encapsulation information corresponding to the source virtual machine, into the network identifier field; and
filling inner-layer quintuple information in the inner-layer encapsulation information corresponding to the source virtual machine, into the field corresponding to each of the inner-layer quintuple.

Herein, the back pressure indication information is specifically used for indicating how to perform the message rate limit processing, etc. The source host machine address is used for sending the back pressure message based on the back pressure indication information. The virtual network identifier and the inner-layer quintuple information are used for identifying the source virtual machine, the back pressure object thereof, etc., that need to be performed the rate limit processing.

It can be seen from the above description that the back pressure indication information may include the at least one processing manner, the back pressure object, the rate limit type, etc.

Therefore, in some embodiments, the at least one back pressure field may include a processing manner field, a rate limit type field, and a back pressure object field;
the filling the back pressure indication information into the at least one back pressure field, may include:
determining at least one processing manner of a rate limit processing manner and an alarm processing manner which correspond to the source virtual machine, and writing a parameter value identifying the at least one processing manner into the processing manner field; for example, the value 0 indicates the rate limit processing manner, and the value 1 indicates the alarm processing manner;
in a case where the at least one processing manner includes the rate limit processing manner, determining a rate limit type corresponding to the source virtual machine, and writing a parameter value identifying the rate limit type into the rate limit type field; for example, the value 0 indicates the pps rate limit, the value 1 indicates the bps rate limit, and the value 2 indicates performing the pps rate limit and the bps rate limit at the same time; and
determining a back pressure object in the source virtual machine, determining valid information in the inner-layer quintuple information based on the back pressure object, and writing a parameter value identifying the valid information into the back pressure object field; for example, the value 0 indicates that the source IP address in the inner-layer quintuple information is valid, the value 1 indicates that the triple, that is, the source IP address, the destination IP address and the transport layer protocol, in the inner-layer quintuple information are valid, and the value 2 indicates that all inner-layer quintuple are valid. Herein, that the source IP address is valid represents that the back pressure object is all message flows sent by the source virtual machine, that the triple are valid represent that the back pressure object is all message flows which are sent by the source virtual machine to the destination virtual machine corresponding to the message flow to be limited in rate sent by the source virtual machine, and that the quintuple are valid represent that the back pressure object is the message flow to be limited in rate sent by the source virtual machine.

In some embodiments, the back pressure message may also include at least one feedback field; wherein the at least one feedback field is used for filling a processing result after performing the message rate limit processing, to generate a response message; and
the method may also include: receiving the response message; and outputting rate limit prompt information based on the response message.

Optionally, the response message may be used as the rate limit prompt information.

Herein, the at least one feedback field may include, for example, a virtual machine identifier field used for filling a virtual machine identifier of the source virtual machine. In addition, the at least one feedback field may also include: a packet forwarding rate field used for filling a current packet forwarding rate of the back pressure object and/or a current bit rate field used for filling a current bit rate of the back pressure object. In addition, the at least one feedback field may also include at least one of: an average packet forwarding rate field used for filling an average packet forwarding rate of the back pressure object within a recent preset time range, a maximum packet forwarding rate field used for filling a maximum packet forwarding rate of the back pressure object within the recent preset time range, an average bit rate field used for filling an average bit rate of the back pressure object within the recent preset time range, and a maximum bit rate field used for filling a maximum bit rate of the back pressure object within the recent preset time range. The recent preset time range may refer to the last 10 minutes, for example.

The source virtual switch may acquire the corresponding processing result based on the at least one feedback field and fill the processing result into the corresponding feedback field.

In some embodiments, the back pressure message may also include an attack direction field, and the method may also include:
in a case where the at least one processing manner includes alarm processing, determining a traffic attack direction; and
filling a parameter value identifying the traffic attack direction into the attack direction field. For example, the value 0 indicates an internal network attack, and the value 1 indicates an external network attack.

The traffic attack direction identified by the field value in the attack direction field is used as a kind of alarm information. After the processing result after the message rate limit processing is filled into the back pressure message, a response message is formed and output.

In some embodiments, the back pressure message may also include a network protocol field, and the method may also include:
writing a parameter value identifying an inner-layer network protocol into the network protocol field. For example, the value 0 indicates IPV4 (Internet Protocol version 4), and the value 1 indicates IPV6 (Internet Protocol version 6).

The network protocol field is used for parsing and obtaining the inner-layer quintuple information from the back pressure message according to a network protocol identified by a field value.

For ease of understanding, as shown in FIG. 3, it shows a schematic diagram of a message format of a back pressure message in a practical application. In combination with the relevant description above, fields that may be included in the back pressure message are introduced below.

Action: is a processing manner field. Values thereof may include 0 or 1. The value 0 indicates the alarm processing manner, indicating only alarm without rate limit. The value 1 indicates the rate limit processing manner, performing a rate limit action.

Limit_type: is a rate limit type field. Values thereof may include 0, 1, or 2. The value 0 indicates performing pps rate limit. The value 1 indicates performing bps rate limit. The value 3 indicates performing the pps rate limit and the bps rate limit at the same time. Optionally, when the value of the Action is 0, the Limit_type may be a null value.

Direction: is an attack direction field. Values thereof may include 0 or 1. The value 0 indicates an internal network direction. The value 1 indicates an external network direction. Herein, when the value of the Direction is 1, the value of the Action is 0.

key_type: is a back pressure object field. Values thereof may include 0, 1, or 2. The value 0 indicates that the inner-layer source IP address is valid. The value 1 indicates that the inner-layer triple (the source IP address, the destination IP address, the transport layer protocol) are valid. The value 2 indicates that the inner-layer quintuple (the source IP address, the destination IP address, the source port, the destination port, the transport layer protocol) are valid.

Ncip: is a host machine field. The value thereof is taken as the host machine IP address of the host machine where the source virtual machine satisfying the rate limit condition is located.

tunnel id: is a network identifier field. The value thereof is taken as the virtual network identifier, such as VNI, of the virtual network where the source virtual machine satisfying the rate limit condition is located.

Af: is a network protocol field. The value thereof is taken as an inner-layer network protocol.

inner_proto: is one of the inner-layer quintuple fields, an inner-layer protocol field. The value thereof is taken as an inner-layer transport layer protocol number.

inner src ip: is one of the inner-layer quintuple fields, an inner-layer source address field. The value thereof is taken as an inner-layer source IP address.

inner dst ip: is one of the inner-layer quintuple fields, an inner-layer source address field. The value thereof is taken as an inner-layer destination IP address.

inner src port: is one of the inner-layer quintuple fields, an inner-layer source port field. The value thereof is taken as an inner-layer source port number.

inner dst port: is one of the inner-layer quintuple fields, an inner-layer destination port field. The value thereof is taken as an inner-layer destination port number.

ecs_id: is a virtual machine identifier field. The value thereof is taken as a virtual machine identifier of the source virtual machine that satisfies the rate limit condition, such as a virtual machine name.

out_pps: is a current packet forwarding rate field. The value thereof is taken as a current pps of the back pressure object.

avg_pps: is an average packet forwarding rate field. The value thereof is taken as an average pps of the back pressure object within a recent preset time range, such as an average pps within the last 10 minutes.

max_pps: is a maximum packet forwarding rate field. The value thereof is taken as a maximum pps of the back pressure object within the recent preset time range, such as a maximum pps within the last 10 minutes.

Herein, the constructed back pressure message may be sent based on the host machine address in the Ncip field.

FIG. 4 is a flowchart of another embodiment of a control method provided in the present application. This embodiment introduces the process of message rate limit processing from the perspective of a back pressure information receiving end. The receiving end specifically refers to a source virtual switch. This method may include the following several steps.

401: receiving back pressure information.

Herein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing an access message, and parsing the access message. The specific implementation may refer to the embodiment shown in FIG. 2 in detail, and will not be repeated here.

402: performing message rate limit processing on the source virtual machine requesting rate limit according to the back pressure information.

Herein, the source virtual machine requesting the rate limit may be determined according to the inner-layer quintuple information, the virtual network identifier, etc., in the back pressure information.

In some embodiments, the performing the message rate limit processing on the source virtual machine requesting the rate limit according to the back pressure information, may include: performing the message rate limit processing on a back pressure object, indicated by the back pressure information, in the source virtual machine, according to the back pressure information requesting the rate limit.

In some embodiments, the performing the message rate limit processing on the source virtual machine requesting the rate limit according to the back pressure information, may include: performing the message rate limit processing on the source virtual machine requesting the rate limit, according to at least one processing manner indicated by the back pressure information.

In some embodiments, the performing the message rate limit processing on the source virtual machine requesting the rate limit, according to at least one processing manner indicated by the back pressure information, may include:
determining the at least one processing manner indicated by the back pressure information;
in a case where the at least one processing manner includes an alarm processing manner, generating a first feedback result, based on a virtual machine identifier of the source virtual machine requesting the rate limit and packet sending situation information of the source virtual machine;
in a case where the at least one processing manner includes a rate limit processing manner, performing rate limit processing on message sending of the source virtual machine requesting the rate limit, and generating a second feedback result based on the virtual machine identifier of the source virtual machine and the packet sending situation information of the source virtual machine; and
generating response information based on the first feedback result or the second feedback result, and feeding back the response information to the destination end.

Herein, performing the rate limit processing on the message sending of the source virtual machine requesting the rate limit, may specifically include: in combination with the back pressure object, performing the rate limit processing on message sending in a certain message flow represented by the back pressure object in the source virtual machine requesting the rate limit. Herein, performing the rate limit processing may include performing the pps rate limit and/or performing the bps rate limit, etc. Specifically, performing the rate limit processing may include: performing the rate limit processing on the virtual network card corresponding to the source virtual machine, and performing the pps rate limit and/or the bps rate limit on a message flow forwarded from the virtual network card, such as reducing the pps or bps by a certain percentage.

In addition, after performing the rate limit processing on the message sending, a rate limit record may also be generated for storage.

Herein, the packet sending situation information in the first feedback result may include, for example, the current packet forwarding rate, the average packet forwarding rate within the last 10 minutes, and the maximum packet forwarding rate within the last 10 minutes, etc.

The packet sending situation information in the second feedback result may include, for example, the current packet forwarding rate after performing the rate limit processing, the average packet forwarding rate within the last 10 minutes, and the maximum packet forwarding rate within the last 10 minutes, etc.

It can be seen from the above description that the back pressure information is sent in the form of back pressure message. Therefore, in some embodiments, the receiving the back pressure information may include: receiving a back pressure message; and parsing the back pressure message, to obtain back pressure indication information, a virtual network identifier and inner-layer quintuple information in the back pressure message;
the performing the message rate limit processing on the source virtual machine requesting the rate limit according to the back pressure information, may include:
determining the source virtual machine requesting the rate limit, based on the virtual network identifier and a source virtual machine address in the inner-layer quintuple information; and
performing the message rate limit processing on the source virtual machine according to the back pressure indication information.

Optionally, the performing the message rate limit processing on the source virtual machine according to the back pressure indication information, may include:
determining valid information in the inner-layer quintuple information according to a back pressure object field value in the back pressure indication information; and
performing the message rate limit processing on a back pressure object identified by the valid information, according to at least one processing manner and a rate limit type in the back pressure indication information.

In some embodiments, the method may also include:
acquiring a processing result after performing the message rate limit processing on the source virtual machine;
filling the processing result into at least one feedback field in the back pressure message, to generate a response message; and
sending the response message to the destination end.

Herein, the processing result may include the first feedback result or the second feedback result described above.

In addition, in order to ensure normal sending of a message, in some embodiments, the receiving the back pressure information may include: receiving the back pressure information periodically;
the method may also include:
in a case where the back pressure information is not received within a specified time, performing a recovery operation on the back pressure object which has been subjected to rate limit processing.

The back pressure object which has been subjected to the rate limit processing may be determined based on the rate limit record, and the recovery operation is performed on the back pressure object. For example, it is assumed that the pps rate limit is performed on the back pressure object, the recovery operation may refer to: increasing the pps corresponding to the back pressure object by a certain percentage, etc.

In some embodiments, after performing the recovery operation on the back pressure object which has been subjected to the rate limit processing, the method may also include:
if the back pressure object which has been subjected to the rate limit processing is recovered to the original state before the rate limit processing, deleting the rate limit record corresponding to the back pressure object which has been subjected to the rate limit processing.

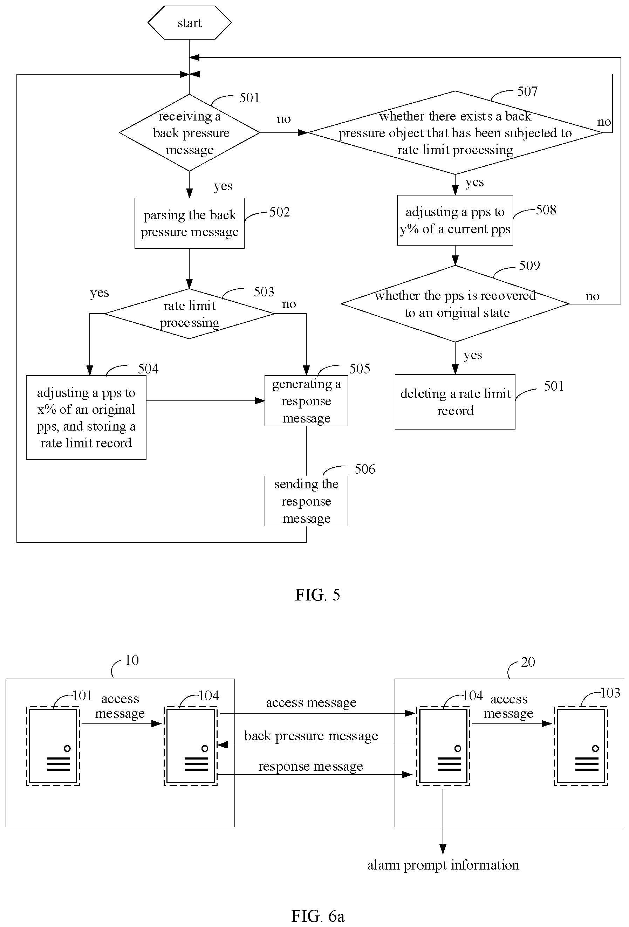

As shown in FIG. 5, FIG. 5 is a flowchart of another embodiment of a control method provided by an embodiment of the present application. This embodiment is performed by a source virtual switch, and may include the following several steps.

501: at a specified time, determining whether a back pressure message is received; if the back pressure message is received, performing step 502; and if the back pressure message is not received, performing step 507.

502: parsing the back pressure message.

Relevant information in the back pressure message, for example, a source virtual machine requesting rate limit, a back pressure object in the source virtual machine, a processing manner, a rate limit type, etc., may be obtained by parsing the back pressure message.

Herein, in this embodiment, the rate limit type as pps is taken as an example for explanation.

503: determining whether the rate limit processing manner is performed; if the rate limit processing manner is performed, performing step 504; and if the rate limit processing manner is not performed, performing step 505.

504: adjusting a pps, corresponding to the back pressure object, in a virtual network card to x% of an original pps, and generating and storing a rate limit record; and then, performing step 505.

Herein, x is less than 100.

505: determining the virtual machine identifier and the packet sending situation information of the source virtual machine requesting the rate limit, and filling them into the feedback field in the back pressure message, to generate a response message.

506: sending the response message to a destination end.

507: based on the rate limit record, determining whether there is a back pressure object that has been subjected to the rate limit; if there is the back pressure object that has been subjected to the rate limit, performing step 508.

508: adjusting the pps, corresponding to the back pressure object that has been subjected to the rate limit, in the virtual network card to y% of a current pps; wherein y is greater than 100.

509: based on the rate limit record, determining whether the pps corresponding to the back pressure object that has been subjected to the rate limit is recovered to the original state; and if the pps corresponding to the back pressure object that has been subjected to the rate limit is recovered to the original state, performing step 510.

510: deleting the rate limit record corresponding to the back pressure object that has been subjected to the rate limit.

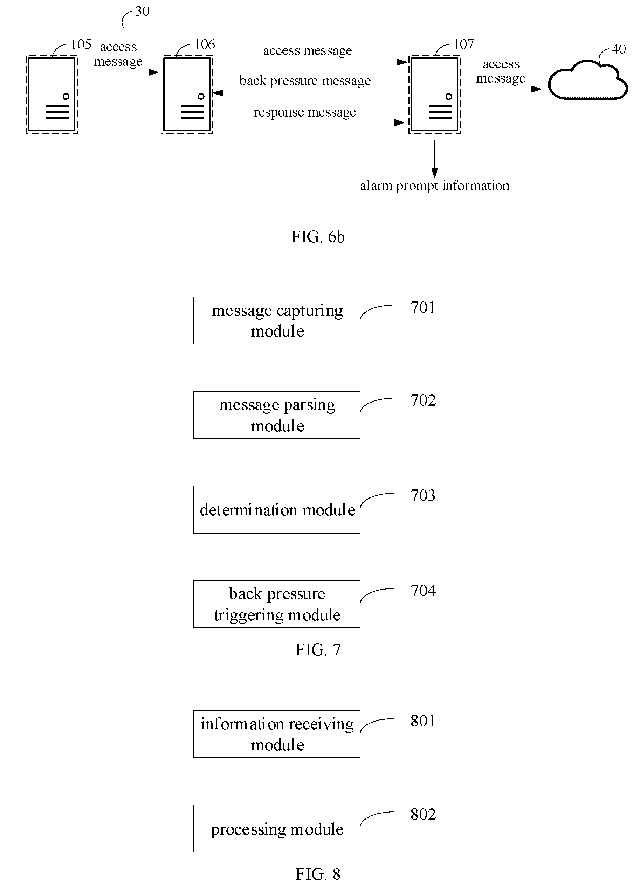

The technical solution of the present application is introduced in combination with two traffic attack scenarios shown respectively in FIG. 1a and FIG. 1b below. FIG. 6a is a schematic diagram of control interaction corresponding to the traffic attack scenario in FIG. 1a. When the destination virtual switch 104 detects that the access traffic satisfies the rate limit condition, the destination virtual switch 104 captures an access message and obtains the inner-layer encapsulation information by parsing the access message. Based on the inner-layer encapsulation information, the destination virtual switch 104 may determine the source virtual machine 101 that satisfies the rate limit condition, and send a back pressure message to the source host machine 10 where the source virtual machine 101 is located. The source virtual switch 102 in the source host machine 10 receives the back pressure message, and performs the message rate limit processing on the source virtual machine 101 based on the back pressure message. The source virtual switch 102 generates a response message based on the processing result, and sends the response message to the destination virtual switch 104. The destination virtual switch 104 may output alarm prompt information based on the response message.

FIG. 6a is a schematic diagram of control interaction corresponding to the traffic attack scenario in FIG. 1b. When the virtual gateway 107 detects that the access traffic satisfies the rate limit condition, the virtual gateway 107 captures an access message and obtains the inner-layer encapsulation information by parsing the access message. Based on the inner-layer encapsulation information, the virtual gateway 107 may determine the source virtual machine 105 that satisfies the rate limit condition, and send a back pressure message to the source host machine 30 where the source virtual machine 105 is located. The source virtual switch 106 in the source host machine 30 receives the back pressure message, and performs the message rate limit processing on the source virtual machine 105 based on the back pressure message. The source virtual switch 106 generates a response message based on the processing result, and sends the response message to the virtual gateway 107. The virtual gateway 107 may output alarm prompt information based on the response message.

In addition, in a practical application, the technical solution of an embodiment of the present application may be used for solving the traffic attack problem in a Vxlan network. Therefore, an embodiment of the present application also provides a control method applied in a Vxlan network. The control method may include:
detecting that access traffic satisfies a rate limit condition, and capturing a Vxlan message;
parsing the Vxlan message to obtain inner-layer encapsulation information in the Vxlan message;
determining, based on the inner-layer encapsulation information, a source virtual machine that satisfies the rate limit condition; and
sending back pressure information to a source host machine where the source virtual machine is located; wherein, the back pressure information is used for instructing to perform message rate limit processing on the source virtual machine.

The difference between this embodiment and the embodiment shown in FIG. 2 is that the access message is specifically the Vxlan message. Other identical or similar steps may refer to the description in the previous embodiment in detail, and will not be repeated here.

An embodiment of the present application also provides a control method applied in a Vxlan network. The control method may include:
receiving back pressure information; wherein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing a Vxlan message, and parsing the Vxlan message; and
performing message rate limit processing on the source virtual machine according to the back pressure information.

FIG. 7 is a structural schematic diagram of an embodiment of a control apparatus provided by an embodiment of the present application. The apparatus may include:
a message capturing module 701, configured for detecting that access traffic satisfies a rate limit condition, and capturing an access message;
a message parsing module 702, configured for parsing the access message to obtain inner-layer encapsulation information in the access message;
a determination module 703, configured for determining, based on the inner-layer encapsulation information, a source virtual machine that satisfies the rate limit condition; and
a back pressure triggering module 704, configured for sending back pressure information to a source host machine where the source virtual machine is located; wherein, the back pressure information is used for instructing to perform message rate limit processing on the source virtual machine.

The control apparatus shown in FIG. 7 may perform the control method described in the embodiment shown in FIG. 2, and its implementation principle and technical effect will not be repeated. The specific manners in which each module and unit of the control apparatus in the above embodiment performs operations have been described in detail in the embodiments related to the method, and will not be explained here in detail.

FIG. 8 is a structural schematic diagram of a further embodiment of a control apparatus provided by an embodiment of the present application. The apparatus may include:
an information receiving module 801, configured for receiving back pressure information; wherein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing an access message, and parsing the access message; and
a processing module 802, configured for performing message rate limit processing on the source virtual machine according to the back pressure information.

The control apparatus shown in FIG. 8 may perform the control method described in the embodiment shown in FIG. 4, and its implementation principle and technical effect will not be repeated. The specific manners in which each module and unit of the control apparatus in the above embodiment performs operations have been described in detail in the embodiments related to the method, and will not be explained here in detail.

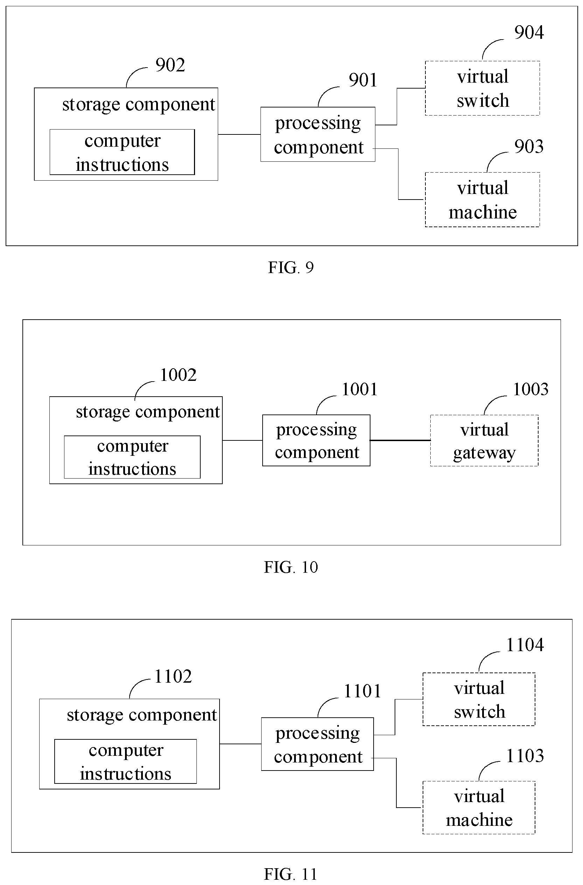

In addition, an embodiment of the present application also provides a computing device. As shown in FIG. 9, the computing device may include a processing component 901 and a storage component 902. The storage component 902 stores one or more computer instructions. The one or more computer instructions are used for being called and executed by the processing component 901, to enable the processing component 901 to run at least one virtual machine 903 and run a virtual switch 904 implementing the control method shown in FIG. 1.

Herein, the processing component includes one or more processors. The processor may specifically refer to a CPU.

In addition, the computing device may also inevitably include other components, for example, an input/output interface, a communication component, etc. The input/output interface provides an interface between the processing component and a peripheral interface module. The peripheral interface module may be an output device, an input device, etc. The communication component is configured for facilitating wired or wireless communication between the computing device and other devices.

In a practical application, the computing device may be an elastic computing host provided for a cloud computing platform. In this case, the computing device may refer to a cloud server.

An embodiment of the present application also provides a computer readable storage medium on which a computer program is stored. The computer program, when executed by a computer, may implement the control method of the embodiment shown in FIG. 2 above.

In addition, an embodiment of the present application also provides a computing device. As shown in FIG. 10, the computing device may include a processing component 1001 and a storage component 1002. The processing component 1001 may include one or more processors. The storage component 1002 stores one or more computer instructions. The one or more computer instructions are used for being called and executed by the processing component 1001, to run a virtual gateway 1003 implementing the control method shown in FIG. 1.

Herein, the processor may specifically refer to a CPU.

In addition, the computing device may also inevitably include other components, for example, an input/output interface, a communication component, etc. The input/output interface provides an interface between the processing component and a peripheral interface module. The peripheral interface module may be an output device, an input device, etc. The communication component is configured for facilitating wired or wireless communication between the computing device and other devices.

In a practical application, the computing device may be an elastic computing host provided for a cloud computing platform. In this case, the computing device may refer to a cloud server.

An embodiment of the present application also provides a computer readable storage medium on which a computer program is stored. The computer program, when executed by a computer, may implement the control method of the embodiment shown in FIG. 2 above.

In addition, an embodiment of the present application also provides a computing device. As shown in FIG. 11, the computing device may include a processing component 1101 and a storage component 1102. The processing component 1101 includes one or more processors. The storage component stores one or more computer instructions. The one or more computer instructions are used for being called and executed by the processing component, to run at least one virtual machine 1103 and run a virtual switch 1104 implementing the control method of the embodiment shown in FIG. 4.

Herein, the processor may specifically refer to a CPU.

In addition, the computing device may also inevitably include other components, for example, an input/output interface, a communication component, etc. The input/output interface provides an interface between the processing component and a peripheral interface module. The peripheral interface module may be an output device, an input device, etc. The communication component is configured for facilitating wired or wireless communication between the computing device and other devices.

In a practical application, the computing device may be an elastic computing host provided for a cloud computing platform. In this case, the computing device may refer to a cloud server.

An embodiment of the present application also provides a computer readable storage medium on which a computer program is stored. The computer program, when executed by a computer, may implement the control method of the embodiment shown in FIG. 4 above.

Those skilled in the art may clearly understand that for the convenience and conciseness of the description, the specific working processes of the system, apparatus, and unit described above may refer to the corresponding processes in the aforementioned method embodiments, and will not be repeated here.

The apparatus embodiments described above are only schematic. Herein, the units explained as separate components may be or may not be physically separated, and the components displayed as units may be or may not be physical units, that is, they may be located in one place or may be distributed across multiple network units. A part or all of modules may be selected according to actual needs to achieve the purpose of the solutions in these embodiments. Those ordinary skilled in the art may understand and implement these embodiments without creative efforts.

From the above description of the implementations, those skilled in the art may clearly understand that various implementations may be implemented by means of software and a necessary universal hardware platform, and of course, may also be implemented through hardware. Based on such understanding, the above technical solutions essentially or the portion thereof contributing to the prior art may be embodied in the form of a software product. The computer software product may be stored in a computer readable storage medium, such as, an ROM/RAM, a magnetic disk, an optical disk, etc., and includes several instructions such that a computer device (which may be a personal computer, a server, or a network device, etc.) performs the methods described in various embodiments or certain portions of the embodiments.

Finally, it should be noted that: the above embodiments are only used to describe, not to limit, the technical solutions of the present application. Although the present application has been described in detail with reference to the above embodiments, those ordinary skilled in the art should understand that those ordinary skilled in the art may still modify the technical solutions recorded in the above various embodiments or replace a part of technical features in the technical solutions equally. However, these modifications or replacements do not make the essence of the corresponding technical solutions separate from the spirit and scope of the technical solutions of the various embodiments of the present application.

## Claims

1. A control method, comprising:
detecting that access traffic satisfies a rate limit condition, and capturing an access message;
parsing the access message to obtain inner-layer encapsulation information in the access message;
determining, based on the inner-layer encapsulation information, a source virtual machine that satisfies the rate limit condition; and
sending back pressure information to a source host machine where the source virtual machine is located; wherein the back pressure information is used for instructing to perform message rate limit processing on the source virtual machine.

2. The method of claim 1, wherein the determining, based on the inner-layer encapsulation information, the source virtual machine that satisfies the rate limit condition, comprises:
aggregating access messages based on a message flow identified by the inner-layer encapsulation information, to determine numbers of messages for different message flows;
selecting a message flow to be limited in rate according to the numbers of messages for the different message flows; and
determining a source virtual machine corresponding to the message flow to be limited in rate.

3. The method of claim 2, wherein the selecting the message flow to be limited in rate according to the numbers of messages for the different message flows, comprises:
selecting a message flow to be limited in rate with the number of messages greater than or equal to a preset number, according to the numbers of messages for the different message flows.

4. The method of claim 2, wherein the determining the message flow to be limited in rate according to the numbers of messages for the different message flows, comprises:
selecting top N message flows, in a descending order of the numbers of messages, as message flows to be limited in rate.

5. The method of claim 2, further comprising:
determining a back pressure object in the source virtual machine; wherein, the back pressure object comprises all message flows sent by the source virtual machine, all message flows which are sent by the source virtual machine to a destination virtual machine corresponding to a message flow to be limited in rate sent by the source virtual machine, or a message flow to be limited in rate sent by the source virtual machine; and
generating the back pressure information at least according to the back pressure object; wherein, the back pressure information is used for instructing to perform message rate limit processing on the back pressure object.

6. The method of claim 2, further comprising:
determining at least one processing manner of a rate limit processing manner and an alarm processing manner which correspond to the source virtual machine; and
generating the back pressure information at least according to the at least one processing manner; wherein, the back pressure information is used for instructing to perform message rate limit processing on the source virtual machine according to the at least one processing manner.

7. The method of claim 6, further comprising:
in a case where the at least one processing manner comprises the rate limit processing manner, determining a rate limit type corresponding to the source virtual machine; and
the generating the back pressure information at least according to the at least one processing manner, comprises:
generating the back pressure information at least according to the at least one processing manner and the rate limit type.

8. The method of claim 1, further comprising:
receiving response information, which is fed back after performing the message rate limit processing on the source virtual machine according to the back pressure information; and
outputting alarm prompt information based on the response information.

9. The method of claim 1, further comprising:
parsing the access message to obtain outer-layer encapsulation information; and
the sending the back pressure information to the host machine where the source virtual machine is located, comprises:
constructing a back pressure message, based on back pressure indication information, and inner-layer encapsulation information and outer-layer encapsulation information corresponding to the source virtual machine; and
sending the back pressure message as the back pressure information to the host machine where the source virtual machine is located.

10. The method of claim 9, wherein the back pressure message at least comprises: at least one back pressure field corresponding to the back pressure indication information, a host machine address field, a network identifier field, and a field corresponding to each of inner-layer quintuple; and
the constructing the back pressure message, based on the back pressure indication information, and the inner-layer encapsulation information and the outer-layer encapsulation information corresponding to the source virtual machine, comprises:
filling the back pressure indication information into the at least one back pressure field;
filling a source host machine address in the outer-layer encapsulation information corresponding to the source virtual machine, into the host machine address field;
filling a virtual network identifier in the outer-layer encapsulation information corresponding to the source virtual machine, into the network identifier field; and
filling inner-layer quintuple information in the inner-layer encapsulation information corresponding to the source virtual machine, into the field corresponding to each of the inner-layer quintuple.

11. The method of claim 10, wherein the back pressure message further comprises at least one feedback field; wherein the at least one feedback field is used for filling a processing result after performing the message rate limit processing, to generate a response message; and
the method further comprises:
receiving the response message; and
outputting rate limit prompt information based on the response message.

12. The method of claim 11, wherein the at least one feedback field comprises: a virtual machine identifier field used for filling a virtual machine identifier of the source virtual machine, a current packet forwarding rate field used for filling a current packet forwarding rate of the back pressure object, an average packet forwarding rate field used for filling an average packet forwarding rate of the back pressure object within a recent preset time range, and a maximum packet forwarding rate field used for filling a maximum packet forwarding rate of the back pressure object within the recent preset time range.

13. The method of claim 11, wherein the back pressure message further comprises an attack direction field; and
the method further comprises:
in a case where the source virtual machine corresponds to an alarm processing manner, determining a traffic attack direction; and
filling a parameter value identifying the traffic attack direction into the attack direction field.

14. The method of claim 10, wherein the back pressure message further comprises a network protocol field; and the method further comprises:
filling a parameter value identifying an inner-layer network protocol into the network protocol field; wherein the network protocol field is used for parsing and obtaining the inner-layer quintuple information according to a network protocol identified by a field value.

15. The method of claim 10, wherein the at least one back pressure field comprises a processing manner field, a rate limit type field, and a back pressure object field; and
the filling the back pressure indication information into the at least one back pressure field, comprises:
determining at least one processing manner of a rate limit processing manner and an alarm processing manner which correspond to the source virtual machine, and writing a parameter value identifying the at least one processing manner into the processing manner field;
in a case where the at least one processing manner comprises the rate limit processing manner, determining a rate limit type corresponding to the source virtual machine, and writing a parameter value identifying the rate limit type into the rate limit type field; and
determining a back pressure object in the source virtual machine, determining valid information in the inner-layer quintuple information based on the back pressure object, and writing a parameter value identifying the valid information into the back pressure object field.

16. The method of claim 1, wherein the detecting that the access traffic satisfies the rate limit condition, and capturing the access message, comprises:
detecting that the access traffic satisfies the rate limit condition, and capturing access messages according to a sampling frequency and a sampling quantity.

17. A control method, comprising:
receiving back pressure information; wherein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing an access message, and parsing the access message; and
performing message rate limit processing on the source virtual machine according to the back pressure information.

18. The method of claim 17, wherein the performing the message rate limit processing on the source virtual machine according to the back pressure information, comprises:
performing the message rate limit processing on a back pressure object, indicated by the back pressure information, in the source virtual machine, according to the back pressure information.

19. The method of claim 17, wherein the performing the message rate limit processing on the source virtual machine according to the back pressure information, comprises:
performing the message rate limit processing on the source virtual machine according to at least one processing manner indicated by the back pressure information.

20. The method of claim 19, wherein the performing the message rate limit processing on the source virtual machine according to the at least one processing manner indicated by the back pressure information, comprises:
determining the at least one processing manner indicated by the back pressure information;
in a case where the at least one processing manner comprises an alarm processing manner, generating a first feedback result, based on a virtual machine identifier of the source virtual machine and packet sending situation information of the source virtual machine;
in a case where the at least one processing manner comprises a rate limit processing manner, performing rate limit processing on message sending of the source virtual machine, and generating a second feedback result based on the virtual machine identifier of the source virtual machine and the packet sending situation information of the source virtual machine; and
generating response information based on the first feedback result or the second feedback result, and feeding back the response information to the destination end.

21. The method of claim 17, wherein the receiving the back pressure information, comprises:
receiving the back pressure information periodically; and
the method further comprises:
in a case where the back pressure information is not received within a specified time, performing a recovery operation on the back pressure object which has been subjected to rate limit processing.

22. The method of claim 17, wherein the receiving the back pressure information, comprises:
receiving a back pressure message; and
parsing the back pressure message, to obtain back pressure indication information, a virtual network identifier and inner-layer quintuple information in the back pressure message; and
the performing the message rate limit processing on the source virtual machine according to the back pressure information, comprises:
determining the source virtual machine, based on the virtual network identifier and a source virtual machine address in the inner-layer quintuple information; and
performing the message rate limit processing on the source virtual machine according to the back pressure indication information.

23. The method of claim 22, further comprising:
acquiring a processing result after performing the message rate limit processing on the source virtual machine;
filling the processing result into at least one feedback field in the back pressure message, to generate a response message; and
sending the response message to the destination end.

24. The method of claim 23, wherein the performing the message rate limit processing on the source virtual machine according to the back pressure indication information, comprises:
determining valid information in the inner-layer quintuple information according to a back pressure object field value in the back pressure indication information; and
performing the message rate limit processing on a back pressure object identified by the valid information, according to at least one processing manner and a rate limit type in the back pressure indication information.

25. A control apparatus, comprising:
a message capturing module, configured for detecting that access traffic satisfies a rate limit condition, and capturing an access message;
a message parsing module, configured for parsing the access message to obtain inner-layer encapsulation information in the access message;
a determination module, configured for determining, based on the inner-layer encapsulation information, a source virtual machine that satisfies the rate limit condition; and
a back pressure triggering module, configured for sending back pressure information to a source host machine where the source virtual machine is located; wherein, the back pressure information is used for instructing to perform message rate limit processing on the source virtual machine.

26. A control apparatus, comprising:
an information receiving module, configured for receiving back pressure information; wherein, the back pressure information is sent by a destination end for a source virtual machine that satisfies a rate limit condition; the source virtual machine that satisfies the rate limit condition is determined based on inner-layer encapsulation information; the inner-layer encapsulation information is obtained by detecting, by the destination end, that access traffic satisfies the rate limit condition, capturing an access message, and parsing the access message; and
a processing module, configured for performing message rate limit processing on the source virtual machine according to the back pressure information.

27. A computing device, comprising a processing component and a storage component, wherein the storage component stores one or more computer instructions, and the one or more computer instructions are used for being called and executed by the processing component, to run at least one virtual machine and run a virtual switch implementing the control method of any one of claims 1 to 16.

28. A computing device, comprising a processing component and a storage component, wherein the storage component stores one or more computer instructions, and the one or more computer instructions are used for being called and executed by the processing component, to run a virtual gateway implementing the control method of any one of claims 1 to 16.

29. A computing device, comprising a processing component and a storage component, wherein the storage component stores one or more computer instructions, and the one or more computer instructions are used for being called and executed by the processing component, to run at least one virtual machine and run a virtual switch implementing the control method of any one of claims 17 to 24.

30. A computer storage medium, storing a computer program, wherein the computer program, when executed by a computer, implements the control method of any one of claims 1 to 16.

31. A computer storage medium, storing a computer program, wherein the computer program, when executed by a computer, implements the control method of any one of claims 17 to 24.
